# EUROPEAN PATENT APPLICATION

(11) **EP 0 792 903 A1**
(43) Date of publication of application: **03.09.1997**
(21) Application number: 96306895.2
(22) Date of filing: 23.09.1996
(51) Int. Cl.: C08G 73/10, B29C 33/10, B29C 33/38, B29C 70/48

(54) **Method of molding polyimide resin and apparatus therefor**

(30) Priority: 28.02.1996 JP 41769/96
(71) Applicant: RESEARCH INSTITUTE OF ADVANCED MATERIAL GAS-GENERATOR, Tokyo 112 (JP)
(72) Inventor: Soeda, Yoshihiro, Hiratsuka-shi, Kanagawa-ken (JP)
(74) Representative: Sturt, Clifford Mark

(57) **Abstract**

A method of molding a polyimide resin is disclosed which comprises heating starting materials of polyimide resin in a cavity 1 of a metal mold 2,3 having an exhaust port 3a provided with a porous filter 10 to thereby effect polymerization and curing while expelling moisture generated during the polymerization and curing along with a solvent contained in the above starting materials through the porous filter from the exhaust port outside the cavity. Further, an apparatus is disclosed in which an exhaust port provided with a porous filter, which exhaust port is adapted to expel the above moisture generated during the polymerization and curing of starting materials of polyimide resin along with the solvent contained in these starting materials outside the cavity, is arranged at part of a metal mold.

## Description

The present invention relates to a method of easily molding a polyimide resin and an apparatus therefor.

The polyimide resin becomes insoluble in an organic solvent with the increase of the degree of polymerization thereof, so that, for example, when used as a matrix resin of fiber-reinforced composite materials, the polyimide resin has been molded by the method comprising dissolving an amic acid prepolymer as a precursor of the polyimide resin to be subjected to dehydration cyclization (imide formation step) in a high-boiling-point solvent such as dimethylformamide (DMF) and infiltrating the resultant solution into reinforcing fibers such as glass fibers charged in a metal mold.

However, this molding method has encountered the problem such that it is difficult to remove water generated by cyclization condensation during the heat molding and a high-boiling-point solvent, so that these remain in the molded item as voids, thereby deteriorating the properties of the molded item.

The object of the present invention is to provide a method of easily molding a polyimide resin, which method enables easily removing water generated as a condensation by-product at the imide formation step during the heat molding, organic solvent, etc. so that voids are not present in the molded item and to provide an apparatus therefor.

The method of molding a polyimide resin according to the present invention comprises heating a mixture of nudic anhydride monomethyl ester, 4,4'-methylenedianiline, 3,3' ,4,4'-benzophenonetetracarboxylic anhydride dimethyl ester and a solvent in a cavity of a metal mold, characterised by the metal mold having an exhaust port provided with a porous filter to thereby effect polymerization and curing by heating while expelling moisture generated during the polymerization and curing along with the solvent through the porous filter from the exhaust port outside the cavity of the metal mold.

This invention provides a polyimide resin molding apparatus enabling disposing a mixture of nudic anhydride monomethyl ester, 4,4'-methylenedianiline, 3,3' ,4,4'-benzo-phenonetetracarboxylic anhydride dimethyl ester and a solvent in a cavity of a metal mold and heating the varnish to thereby effect polymerization and curing, characterised in that an exhaust port adapted to expel moisture generated during the polymerization and curing along with the solvent outside the cavity of the metal mold is arranged at a part of the metal mold and the exhaust port is provided with a porous filter.

In the present invention, the exhaust port provided with the porous filter is arranged at a part of the metal mold, so that the moisture generated during the polymerization and curing along with the solvent can easily be expelled through the porous filter. Therefore, the present invention enables obtaining a molded item of a polyimide resin having no voids and thus having excellent properties.

Embodiments of the invention will now be described, by way of example only, with reference to the accompanying diagrammatic figures, in which;
Fig. 1 is a schematic structural diagram of one form of the molding apparatus for implementing the molding method of the present invention; and
Fig. 2 is a schematic structural diagram of another form of the molding apparatus for implementing the molding method of the present invention.

The varnish or mixture employed as the starting material of polyimide resin in the molding method of the present invention which consists of nudic anhydride monomethyl ester (NE), 4,4'-methylenedianiline (MDA), 3,3' ,4,4'-benzophenonetetracarboxylic anhydride dimethyl ester (BTDE) and a solvent is generally known as the polyimide resin starting material of the "in-situ direct Polymerization of Monomeric Reactants" type.

This varnish or mixture (hereinafter referred to as PMR), i.e., the starting material of polyimide resin is in the form of a solution at ordinary temperatures and is converted to a polyimide resin through the 1st to 3rd steps as shown in the following formulae. The thus obtained polyimide resin has a molecular weight of 750 to 5000.

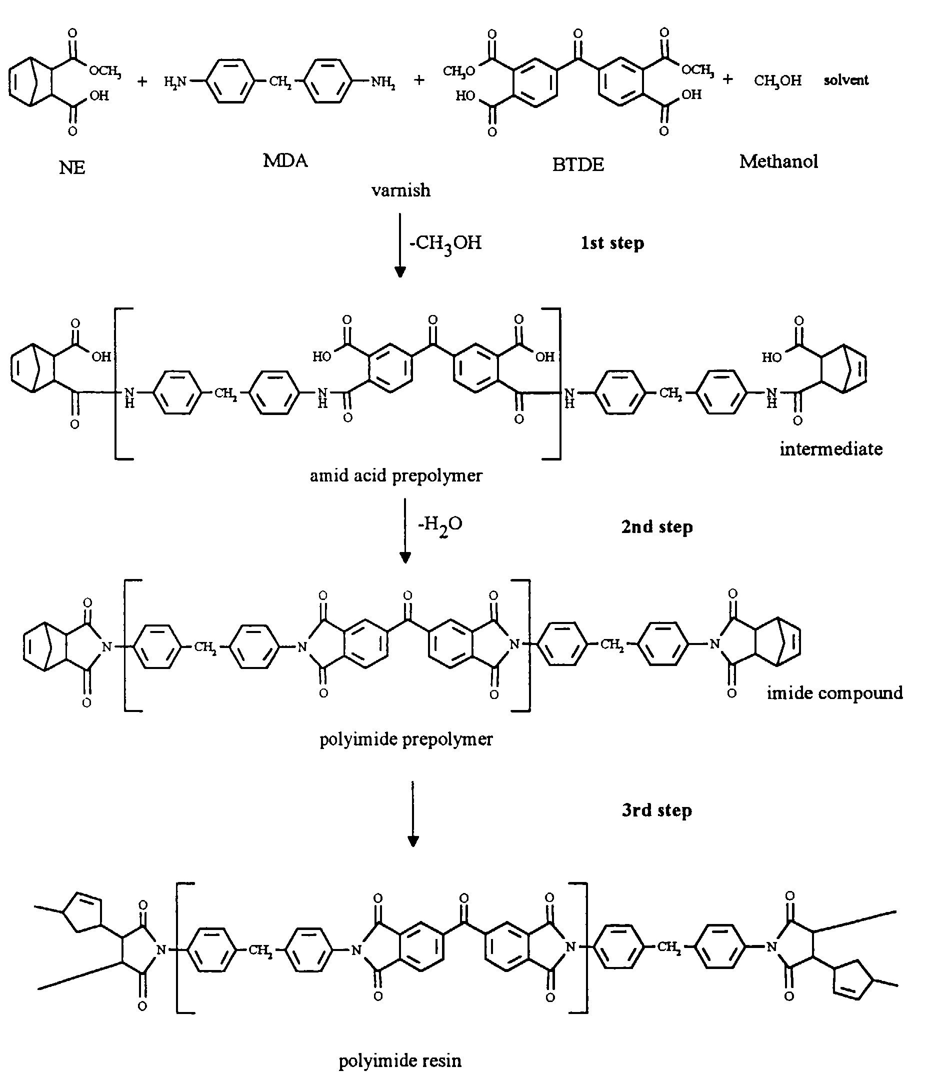

It is preferred that the above varnish contain 2 mol of NE, n+1 mol of MDA and n mol of BTDE provided that n ranges from 1 to 15, especially, from 1 to 10. The reason is that, outside this range, the resultant polyimide resin cannot have a favourable balance of heat resistance, moldability and physical properties. The solvent can be used in an appropriate amount. Examples of suitable solvents include methanol (CH₃OH), ethanol (C₂H₅OH) and isopropanol ((CH₃)₂CHOH).

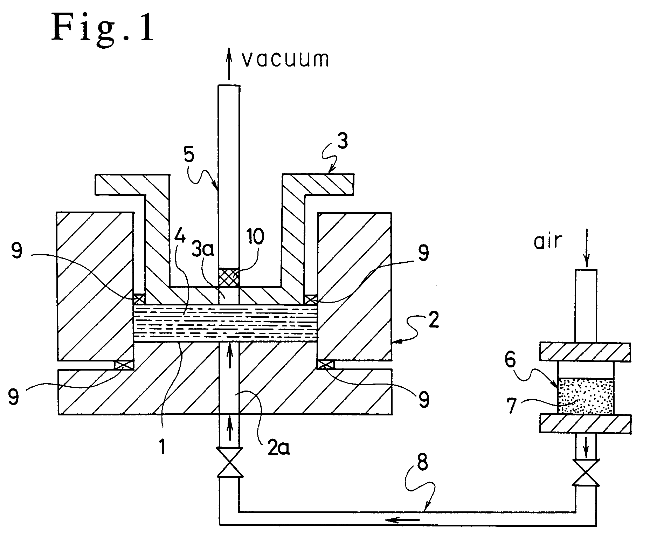

Fig. 1 is a schematic structural diagram of a molding apparatus for implementing the molding method of the present invention. This molding apparatus has such a structure that the pressure of a cavity 1 thereof is reduced to thereby enable press injection of the varnish 7 into the cavity 1.

In the figure, numeral 2 denotes a lower die 2 provided with a cavity 1 and numeral 3 an upper die 3 which is fitted into the lower die 2. A reinforcing fibrous base material 4 such as a carbon fiber cloth or a glass fiber is disposed in the cavity 1 of the lower die 2 prior to molding. The upper die 3 is provided with an exhaust port 3a, and a vacuum suction pipe 5 provided with a porous filter 10 is connected to the exhaust port 3a. The lower die 2 is provided with an injection hole 2a, and a line 8 for feeding the varnish 7 accommodated in a varnish injector 6 into the cavity 1 is connected to the injection hole 2a. Although the porous filter 10 may be directly arranged in the exhaust port 3a of the upper die 3, it is preferred that the porous filter 10 be arranged in an end connection to the exhaust port 3a of the vacuum suction pipe 5 for evacuating the cavity 1 as shown in Fig. 1. The reason is that arrangement of the porous filter 10 in the end connection of the vacuum suction pipe 5 facilitates the removal of solvent and water formed as a condensation by-product outside the cavity 1 which is conducted by suction through the vacuum suction pipe 5.

The lower die 2 and upper die 3 are each provided with heating means, not shown, and a sealant 9 such as an 0-ring for ensuring the airtightness and water-tightness of the cavity 1 is arranged at the part at which the upper die 3 is fitted in the lower die 2.

The porous filter 10 is a porous material composed of a material having excellent corrosion resistance such as polyethylene tetrafluoride, a sintered metal, graphite or a ceramic and has micropores of not greater than 40 µm. The porous filter 10 can be selected from among those having appropriately varied porosity and pore size so as to enable effectively discharging outside moisture generated during the polymerization and curing of the varnish, i.e., PMR, methanol as a solvent, air present in the cavity 1, etc.

For example, with respect to the porous filter produced from polytetrafluoroethylene particles (PTFE particles) of about 1 to 3 µm in particle size, it is preferred that the porosity thereof range from 10 to 40%, especially, from 15 to 35%.

In the molding of the polyimide resin by means of the apparatus shown in Fig. 1, first, a reinforcing fibrous base material 4 such as a carbon fiber cloth or a glass fiber is disposed in the cavity 1 of one die 2 (lower die). Then, the other die 3 (upper die) is fitted thereinto. Subsequently, the cavity 1 is brought into a state of negative pressure by suction through the vacuum suction pipe 5 connected to a vacuum pump, not shown. The varnish 7 accommodated in the varnish injector 6 is press injected through the line 8 into the cavity 1 brought into the state of negative pressure and is infiltrated into the reinforcing fibrous base material 4. When the press injection relied only on the negative pressure achieved by the vacuum pump or the like is difficult because of the high viscosity of the varnish 7, a press means such as a gear pump can be arranged at an appropriate position of the line 8 to thereby attain press injection of the varnish 7.

Thereafter, the inside of the cavity 1 is heated to 160°C to thereby first expel the solvent of the varnish 7 through the porous filter 10 from the exhaust port 3a outside the cavity 1. Next, the vacuum is discontinued and the inside of the cavity 1 is heated to 200°C to thereby conduct an imide formation. Water generated as a condensation by-product during the imide formation is also expelled through the porous filter 10 from the exhaust port 3a outside the cavity 1. Thereafter, not only is the inside of the cavity 1 heated to 316°C but also a pressure of 14 kg/cm² is applied to the inside of the cavity 1. Consequently, an addition reaction of terminal nudic acid occurs, so that a cured polyimide resin is obtained.

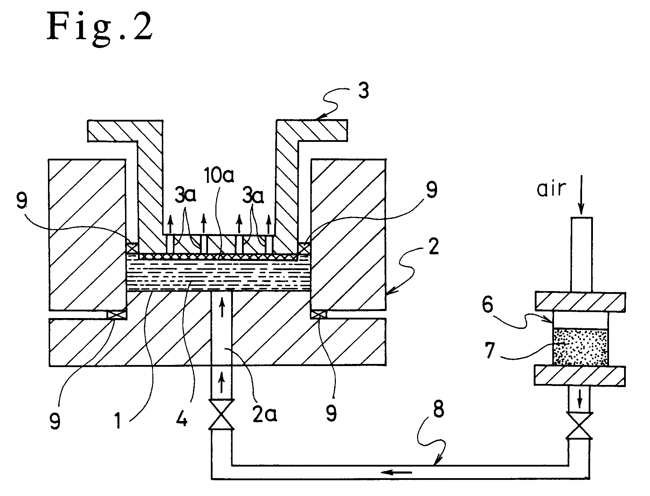

Fig. 2 is a schematic structural diagram of another form of the molding apparatus of the present invention. This molding apparatus is the same as in Fig. 1 except that a plurality of exhaust ports 3a are provided at the bottom of the upper die 3 and a porous filter 10a is arranged on the surface of the bottom at its cavity 1 side.

As is apparent from the foregoing, in the present invention, the varnish of PMR is heated in the cavity of the metal mold to thereby effect polymerization and curing while expelling moisture generated during the polymerization and curing along with the solvent such as methanol through the porous filter from the exhaust port provided in the metal mold outside the cavity. Thus, there can be obtained a molded item of high quality precision which is free of voids.

Moreover, the molding apparatus has a simple structure in which the exchangeable porous filter is provided at a part of the metal mold, so that not only is equipment cost lowered but also non-expert personnel can efficiently perform a molding work.

The aforegoing description has been given by way of example only and it will be appreciated by a person skilled in the art that modifications can be made without departing from the scope of the present invention.

## Claims

1. A method of molding a polyimide resin which comprises heating a mixture of nudic anhydride monomethyl ester, 4,4'-methylenedianiline, 3,3' ,4,4'-benzophenonetetracarboxylic anhydride dimethyl ester and a solvent in a cavity (1) of a metal mold (2,3), characterised by the metal mold having an exhaust port (3a) provided with a porous filter (5) to thereby effect polymerization and curing while expelling moisture generated during the polymerization and curing along with the solvent through the porous filter from the exhaust port outside the cavity of the metal mold.

2. The polyimide resin molding method according to claim 1, wherein the mixture is infiltrated in a reinforcing fibrous base material (4) and heated in the cavity of the metal mold.

3. The polyimide resin molding method according to claim 1 or 2, wherein the mixture contains 2 mol of nudic anhydride monomethyl ester, n+1 mol of 4,4'-methylenedianiline and n mol of 3,3' ,4,4'-benzophenonetetracarboxylic anhydride dimethyl ester provided that n ranges from 1 to 15.

4. The polyimide resin molding method according to any preceding claim, wherein the porous filter is composed of polyethylene tetrafluoride, a sintered metal, graphite or a ceramic and has micropores of not greater than 40 µm.

5. The polyimide resin molding method according to any preceding claim, wherein the solvent is methanol, ethanol or isopropanol.

6. A polyimide resin molding apparatus enabling disposing a mixture of nudic anhydride monomethyl ester, 4,4'-methylenedianiline, 3,3' ,4,4'-benzophenonetetracarboxylic anhydride dimethyl ester and a solvent in a cavity (1) of a metal mold (2,3) and heating the varnish to thereby effect polymerization and curing, characterised in that an exhaust port (3a) adapted to expel moisture generated during the polymerization and curing along with the solvent outside the cavity of the metal mold is arranged at a part of the metal mold and the exhaust port is provided with a porous filter (10).

7. The polyimide resin molding apparatus according to claim 6, wherein the porous filter is composed of polyethylene tetrafluoride, a sintered metal, graphite or a ceramic and has micropores of not greater than 40 µm.

8. The polyimide resin molding apparatus according to claim 6 or claim 7, wherein the solvent is methanol, ethanol or isopropanol.

9. The polyimide resin molding apparatus according to any one of claims 6, 7 or 8, wherein a vacuum suction pipe (5) for evacuating the cavity is connected to the exhaust port of the metal mold and the porous filter is provided at an end connection of the vacuum suction pipe positioned at the exhaust port side.
